# EUROPÄISCHE PATENTSCHRIFT

(11) **EP 1 454 373 B1**
(45) Veröffentlichungstag und Bekanntmachung des Hinweises auf die Patenterteilung: **05.11.2008**
(21) Anmeldenummer: 02792658.3
(22) Anmeldetag: 12.12.2002
(51) Int. Cl.: H01M 8/04

(54) **VERFAHREN ZUM BETRIEB EINER PEM-BRENNSTOFFZELLENANLAGE UND ZUGEHÖRIGE PEM-BRENNSTOFFZELLENANLAGE**
METHOD FOR OPERATING A PEM FUEL CELL SYSTEM AND CORRESPONDING PEM FUEL CELL SYSTEM
PROCEDE DE FONCTIONNEMENT D'UN DISPOSITIF DE PILE A COMBUSTIBLE PEM ET DISPOSITIF DE PILE A COMBUSTIBLE CORRESPONDANT

(30) Priorität: 14.12.2001 DE 10161622
(43) Veröffentlichungstag der Anmeldung: 08.09.2004
(73) Patentinhaber: FEAG GmbH, 91058 Erlangen (DE)
(72) Erfinder: PREIDEL, Walter, 91058 Erlangen (DE); STÜHLER, Walter, 96114 Hirschaid (DE); WEISS, Alfred, 91301 Forchheim (DE); MAUME, Christoph, 38550 Isenbüttel (DE); KUIPERS, Jan-Kasper, 38442 Wolfsburg (DE); HINSENKAMP, Gert, 73230 Kirchheim/Teck (DE); DÜBEL, Olaf, 38550 Isenbüttel (DE)
(74) Vertreter: Dörr, Matthias
(86) Internationale Anmeldenummer: PCT/DE2002/004554
(87) Internationale Veröffentlichungsnummer: WO 2003/052850

(56) Entgegenhaltungen:
- EP-A- 0 948 069
- WO-A-95/06335
- DE-A- 19 945 323
- US-A1- 2001 021 468

## Beschreibung

Die Erfindung bezieht sich auf ein Verfahren zum Betrieb einer PEM-Brennstoffzellenanlage, die mit Wasserstoff als Brenngas und mit Luft als Oxidans arbeitet, wobei für einen schnellen Lastwechsel eine ausreichende Luftversorgung erforderlich ist und die zugeführte Luft befeuchtet werden muss. Daneben bezieht sich die Erfindung auf eine zugehörige Brennstoffzellenanlage, mit wenigstens einem Brennstoffzellenmodul aus PEM-Brennstoffzellen, denen als Prozessgase Wasserstoff einerseits und Luft andererseits zugeführt werden, mit Mitteln zur Luftversorgung und zur Befeuchtung der zugeführten Luft, die einen Verdichter zum Verdichten der Luft und eine Steuereinrichtung zur Führung des Brennstoffzellen-Betriebs umfassen.

Mit Wasserstoff und Luft betriebene sog. Luft-PEM-Brennstoffzellenanlagen sind vom Stand der Technik mit ihrem Verfahrensschema und der zugehörigen Funktionsweise hinreichend vorbekannt: Von einer Vielzahl aufeinandergestapelter Brennstoffzellen, die elektrisch in Reihe geschaltet sind und in der Fachterminologie als Brennstoffzellenstack oder auch kurz "Stack" bezeichnet werden, ist jeweils ein Brennstoffzellenmodul als Kernstück der Anlage gebildet. Mehrere Brennstoffzellenmodule können elektrisch zusammengeschaltet werden. Die Druckschrift WO 95/06335 beschreibt eine PEM-Brennstoffzellenanlage zum Stand der Technik.

Bei letzteren mit Luft betriebenen PEM-Brennstoffzellenmodulen ist für einen stabilen und gegen schnelle Lastwechsel unempfindlichen Arbeitsbetrieb eine ausreichende Luftversorgung erforderlich. Die Versorgung mit Luft soll auch gleichermaßen eine ausreichende Befeuchtung der Luft sicherstellen, wobei der Druck-Taupunkt der Luft etwa der Kühlwasseraustrittstemperatur oder einem höheren Wert bei den jeweiligen Drucken und Temperaturen des Brennstoffzellenstacks entspricht. Dies ist insbesondere dann von Bedeutung, wenn die Kühlung des Brennstoffzellenstacks nicht optimal ist.

Wird eine Brennstoffzellenanlage von einem Verdichter mit Luft versorgt, der keine ausreichende Befeuchtung der Luft bei den an sich gewünschten niedrigen Drücken, beispielsweise 1,5 bar (absolut) am Stackausgang, liefern kann, sind entsprechende Maßnahmen zu ergreifen. Eine technische Problemlösung besteht darin, dass der Eingangsdruck am Stack erhöht wird. Dadurch wird die Befeuchtung der Luft aufgrund der Verschiebung der Wasserdampfpartialdruckkurve einfacher, d.h. weniger energieaufwendig. In vielen Fällen wird die Befeuchtung auch überhaupt dadurch erst erreichbar. Die Erhöhung des Stackeingangsdruckes allein durch eine Erhöhung der Verdichterleistung ist aber, insbesondere wegen einer zu geringen Dynamik bei der Nachführung der für schnelle Lastwechsel erforderlichen Verdichterleistung, nur im begrenzten Maße möglich und in vielen Fällen unwirtschaftlich.

Davon ausgehend ist es Aufgabe der Erfindung, geeignete Maßnahmen zur Befeuchtung der Betriebsluft von Brennstoffzellenanlagen vorzuschlagen sowie eine dafür geeignete Vorrichtung zu schaffen.

Die Aufgabe ist erfindungsgemäß durch die im Patentanspruch 1 angegebenen Maßnahmen gelöst. Eine zugehörige Vorrichtung ist im Patentanspruch 6 angegeben. Weiterbildungen des Verfahrens und der zugehörigen Vorrichtung sind Gegenstand der abhängigen Ansprüche.

Beim erfindungsgemäßen Verfahren wird für höhere Luftverdichterleistungen des Verdichters die Erhöhung des Eingangsdruckes am Stack durch eine Drosselung der Abluft des Stacks realisiert. Da bei geringen Luftleistungen im mittleren oder unteren Leistungsbereich eine konstante Drosselung nicht geeignet ist, um einen genügend hohen Druck zu erzeugen, der dem Verdichter eine zur Verdampfung des Wassers ausreichende Leistung abverlangt, wird zudem die Drosselklappe geregelt.

Letzteres bedeutet insgesamt, dass bei maximaler Leistung eine konstante Drosselung den Betriebsdruck bereits optimal einstellt. Da im Teillastbereich die Drücke zu gering sind, als dass der Verdichter genügend Leistung aufbringen kann, um eine ausreichende Wassermenge zur Befeuchtung zu verdampfen, werden gleichermaßen die Drosselklappe und die Verdichterleistung nachgeregelt.

Bei der erfindungsgemäßen Vorrichtung arbeitet der an sich bekannte Verdichter bereits bei möglichst niedrigen Drücken, wobei die Befeuchtung der Luft im Normalfall dem Druck-Taupunkt bei Kühlwasseraustrittstemperatur entspricht. Sofern aber beim vorgegebenen niedrigen Druck keine ausreichende Befeuchtung der Luft mehr vorliegt, wird der Eingangsdruck am Stack so erhöht, dass die Befeuchtung der Luft durch Verschiebung der Wasserdampfpartialdruckkurve erreicht wird. Zur Realisierung dieser Maßnahmen sind die Drosselklappe mit Ansteuerelektronik und die vorhandene Steuereinrichtung für die Brennstoffzellen-Betriebsführung vorgesehen, wobei die Drosselklappeneinstellung den notwendigen Druck bestimmt und die Verdichtungsleistung und der Verdichter bei der gegebenen Luftfördermenge die elektrische Leistung selbsttätig nachführt. Es wird so ein Druck erreicht, der für eine ausreichende Befeuchtung der Luft notwendig ist.

Mit der Erfindung wird also mit einem einfachen Konzept die Befeuchtung der Luft vorteilhafterweise durch Erhöhung des Eingangsdruckes der Luft am Stack erreicht. Damit wird die Verdichterleistung erhöht und auf diese Weise mehr Wasser verdampft, da bekanntlich durch Druckerhöhung die Wasserdampfpartialdruckkurve verschoben wird. Somit ist weniger Wasser als ohne Verschiebung der Wasserdampfpartialdruckkurve für eine ausreichende Befeuchtung erforderlich. Vorteilhafterweise werden also mit der Erfindung zwei Effekte - nämlich die Verringerung des Energieaufwandes zur Befeuchtung einerseits und die Verringerung der Wassermengen andererseits - realisiert, wobei deren Kombination überraschenderweise die ausreichende Befeuchtung des Wassers für die Luftversorgung der Brennstoffzellen ermöglicht.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
- Figur 1: ein Brennstoffzellenmodul mit Mitteln zur Einstellung des Druckes und
- Figur 2: die Druckregelung bei einer einzigen Brennstoffzelle.

Der Betrieb von Brennstoffzellenanlagen erfordert die Bereitstellung einer ausreichenden Menge an Oxidans, in der Regel Luftsauerstoff, auf der Kathodenseite. Der hierfür erforderliche Luftmassenstrom wird üblicherweise aus der Umgebung angesaugt und mittels einer Druckerhöhungsanlage, z.B. ein Verdichter oder ein Gebläse, auf den Stackeintrittszustand gebracht. Aus verfahrenstechnischen Gründen muss der Luftmassenstrom häufig eine bestimmte Feuchtesättigung aufweisen (z.B. 100 % rel. Feuchte), die über den Drucktaupunkt des Luftmassenstroms am kathodenseitigen Stackeintritt charakterisierbar ist.

In der Regel weisen die luftbenetzten inneren Oberflächen der Brennstoffzelle sowohl räumlich als auch zeitlich eine vom Luftmassenstrom bzw. dessen Drucktaupunkt unterschiedliche Temperatur auf. Die Temperaturen der inneren Oberflächen der Brennstoffzelle werden maßgeblich bestimmt durch die Kühlwasser-Eintrittstemperatur sowie durch die Wärmeentwicklung in der Brennstoffzelle, welche in Abhängigkeit vom Kühlmittelmassenstrom zu einer gegenüber Zustand erhöhten Kühlmittel-Austrittstemperatur führt. Beide Temperaturen hängen damit maßgeblich von der Umgebungstemperatur bzw. bei Einsatz der Brennstoffzellenanlage in einem Fahrzeug von dessen Fahrgeschwindigkeit und ggf. der eingesetzten Zwangsbelüftung ab.

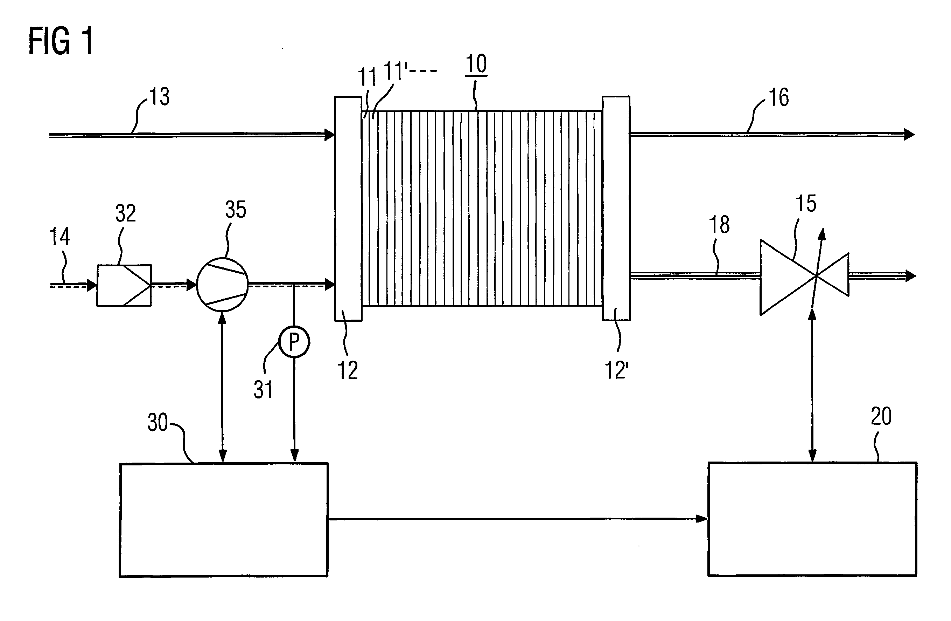

In Figur 1 ist mit 10 ein Brennstoffzellenmodul bezeichnet, das Teil einer Brennstoffzellenanlage ist, die mit Wasserstoff als Brenngas einerseits und mit Luft als Oxidans andererseits betrieben wird. Im Einzelnen bedeuten 11, 11', ... einzelne PEM-Brennstoffzellen, die einen Stapel bilden, der in der Fachterminologie als Brennstoffzellenstack oder kurz "Stack" bezeichnet wird. Der Brennstoffzellenstapel wird durch massive Endplatten 12 und 12', die gleichermaßen die Gasführung bewerkstelligen, begrenzt.

In Figur 1 ist eine Zuführung für das Brenngas mit 13 und eine Zuführung für das Oxidans mit 14 bezeichnet. Wasserstoff als Brenngas wird aus einem separaten Wasserstofftank, gegebenenfalls auch von einem Reformer, zugeführt. Luft als Oxidans ist in der Umgebung vorhanden. Eine für den Brennstoffzellen-Betriebsprozess hinreichende Menge an Oxidans wird über die Leitung 14 aus der Umgebungsluft bereitgestellt, wozu ein in der Figur ein symbolhaft angedeuteter Filter 32 und ein nachfolgender Verdichter 35 vorhanden sind. Der Verdichter 35 ist insbesondere ein vom Stand der Technik erprobter Schraubenverdichter.

Speziell ein Schraubenverdichter mit Flüssigkeitseinspritzung ist aus der DE 195 43 879 A1 bekannt. Dieser Verdichter hat einen guten Wirkungsgrad und gewährleistet die Flüssigkeitseinspritzung mit einfachen Mitteln.

Am Ausgang des Brennstoffzellenstacks 10 wird Restgas über eine Restgasleitung 16 und verbleibende Luft über eine Luftleitung 18 weggeführt. In der Luftleitung 18 ist eine Drosselklappe 15 als steuer- bzw. regelbares Ventil vorhanden. Die Drosselklappe 15 steht in bidirektioneller Verbindung zu einer Ansteuerelektronik 20, die wiederum in bidirektioneller Verbindung zu einer Steuereinrichtung 30 für den Brennstoffzellenbetriebsprozess steht. In die Steuereinrichtung 30 geht der Druck am Eingang des Brennstoffzellenstacks 10 als Istwert ein, wozu ein Druckmesser 31 vorhanden ist.

Es ergibt sich somit folgende Funktionsweise: Im Normalfall wird der Stack 10 vom Flüssigkeits-Schraubenverdichter 35 mit befeuchteter Luft versorgt. Wenn der Verdichter 35 keine ausreichende Befeuchtung der Luft bei den an sich gewünschten niedrigen Drücken liefern kann, beispielsweise 1,5 bar (absolut) am Eingang des Stacks 10, wird der Eingangsdruck erhöht. Durch die damit erreichte Verschiebung der Wasserdampfpartial-Druckkurve wird die notwendige Befeuchtung der Verdichterluft prinzipiell einfacher, d.h. weniger energieaufwendig und gegebenenfalls auch überhaupt erst erreichbar.

Die Erhöhung des Eingangsdruckes erfolgt nunmehr ursächlich durch die Drosselung der Abluft des Stacks 10 über die steuer- bzw. regelbare Drosselklappe 15 in der Luftausgangsleitung 18. Dadurch wird die Verdichtungsleistung des Verdichters 35 bis zu dem Wert erhöht, bei dem der notwendige Druck erreicht wird, der für eine ausreichende Befeuchtung der Luft erforderlich ist.

Entsprechend Figur 1 wird der Regelmechanismus von der zentralen Brennstoffzellen-Steuerung 30 übernommen, da neben der Stellung der Drosselklappe 15 auch die elektrische Leistung des Verdichters 35 selbsttätig angepasst wird. Die spezifische Steuerung über die Ansteuerelektronik 20 hat dabei die Aufgabe, die Stellung der Drosselklappe 15 zu korrigieren.

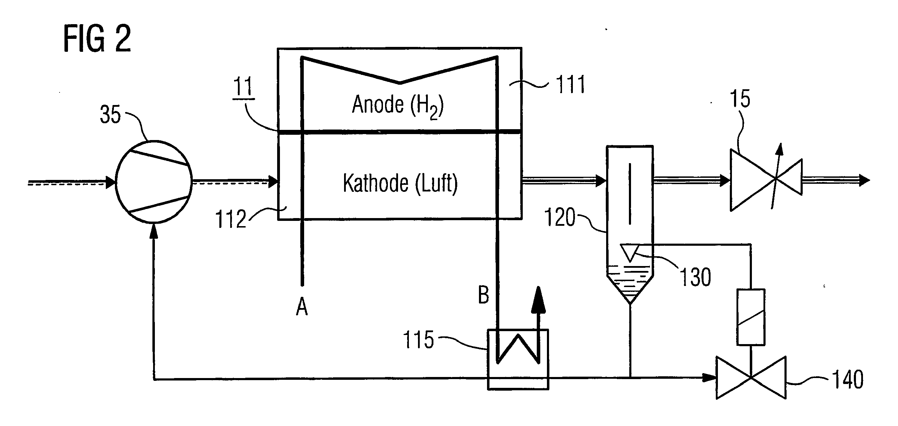

In Figur 2 ist eine einzelne Brennstoffzelle 11 aus Figur 1 dargestellt, die aus einer Anode 111 und einer Kathode 112 mit einem dazwischen angeordneten, nicht im Einzelnen dargestellten Elektrolyten gebildet ist. Es wird wiederum Luft als Oxidans verwendet. Es ist ein fluides Kühlmedium vorhanden.

Die in das Kühlmittel übertragene Wärme wird in Figur 2 zur Vorwärmung des Einspritzwasser-Massenstroms in den Verdichter benutzt. Dies kann z.B. über einen Wärmetauscher 115 oder aber durch direkte Verwendung zumindestens eines Teilstroms des Brennstoffzellen-Kühlmediums als Einspritzfluid erfolgen.

Liegt die Temperatur der inneren luftbenetzten Oberflächen der Brennstoffzelle 11 höher als der Drucktaupunkt des Luftmassenstroms, so wird der Luftmassenstrom überhitzt, d.h. die relative Feuchte sinkt. Dies gilt als nachteiliger bzw. potenziell schädlicher Zustand für den Betrieb der Brennstoffzelle 11, da die Austrocknung der inneren Oberflächen gefördert wird, was zu irreversiblen Schäden an der Brennstoffzelle 11 führen kann. Umgekehrt führen Oberflächentemperaturen unterhalb des Drucktaupunkts zu einer teilweisen Kondensation der in der Luft enthaltenen Feuchtigkeit. Das entstehende Kondensat verhindert den Zugang des Luftsauerstoffs zu den reaktionsfähigen Oberflächen und mindert daher die Leistung der Brennstoffzelle 11, was ebenfalls unerwünscht ist.

Ziel einer optimierten Betriebsweise der Brennstoffzelle 11 ist daher für alle Betriebszustände die Einstellung einer möglichst geringen Temperaturdifferenz zwischen inneren luftbenetzten Oberflächen und dem Drucktaupunkt des Luftmassenstroms. Dieser Temperaturangleich muss hinreichend schnell sein, um der dynamischen Laständerung der Brennstoffzelle folgen zu können.

In Figur 2 wird als geeignete Stellgröße wiederum Druck am kathodenseitigen Stackeintritt verwendet, der z.B. über eine entsprechende Ansteuerung der Druckerhöhungseinrichtung oder aber über ein variabel ansteuerbares Drosselorgan im kathodenseitigen Strömungsweg nach der Brennstoffzelle einstellbar ist. Das Drosselorgan ist wiederum vorteilhafterweise als steuerbare Drosselklappe 15 oder aber als Expansionsmaschine ausgebildet, mit der ein Teil der im Kathoden-Abgas enthaltenen Energie als mechanische Energie rückgewinnbar ist. Die Anordnung wird durch einen Wasserabscheider 120 vervollständigt, der nach der Brennstoffzelle 11 vor und/oder nach dem Drosselorgan 15 angeordnet ist. In dem Wasserabscheider 120 wird sowohl das in der Brennstoffzelle 11 entstehende Produktwasser als auch eventuell im Luftstrom enthaltene Kondensatanteile abgeschieden und dem internen Wasserkreislauf der gesamten Brennstoffzellenanlage zugeführt. Der Wasserabscheider 120 beinhaltet vorteilhafterweise eine Füllstandsregelung 130, welche überschüssiges Wasser über ein elektrisch steuerbares Ventil 140 an die Umgebung oder andere, in Figur 2 nicht dargestellte Anlagenteile abgibt.

Die Veränderung des kathodenseitigen Stackeintrittsdrucks hat drei wesentliche Effekte auf die Eigenschaften des Luftmassenstroms am Stackeintritt. Es gilt im Einzelnen:
- Eine Erhöhung des Drucks führt zu einer Verringerung des spezifischen Volumens des Luftmassenstroms, was bei gleichem Absolutfeuchtegehalt zu einer Erhöhung der relativen Feuchte bzw. zur Erniedrigung des Drucktaupunkts führt.
- Eine Erhöhung des Drucks erfordert eine erhöhte Verdichtungsleistung, welche in der Luft als erhöhte Verdampfungswärmemenge zur Verfügung steht. Es kann also mehr Wasser verdampft werden, was ebenfalls zur Erhöhung der Luftfeuchte bzw. zur Erniedrigung des Drucktaupunkts beiträgt.
- Eine Erhöhung des Drucks bei konstantem Luftmassenstrom führt bei der gezeigten beispielhaften Anordnung der Komponenten zu einer Erhöhung des Einspritzwasser-Massenstroms. Hierdurch steht in verstärktem Maße die im Einspritzwasser enthaltene Energie sowie dessen mit dem Massenstrom erhöhte innere Oberfläche für die Aufbringung von Verdampfungsenthalpie zur Verfügung. Daraus resultiert ebenfalls eine Erhöhung der Luftfeuchte bzw. Erniedrigung des Drucktaupunkts.

Somit kann durch Veränderung des genannten Drucks der Drucktaupunkt der Luft am Stackeintritt in weiten Grenzen variiert werden, um eine möglichst gute Angleichung an die Ein- oder Austrittstemperaturen des Kühlmediums der Brennstoffzelle zu erreichen.

Die Veränderung des Drucks kann durch entsprechend schnelles Einstellen der Regelstrecke aus Verdichter 35 oder Drosselorgan 150 ausreichend schnell beeinflusst werden, um die Minimierung der Temperaturdifferenz zwischen Drucktaupunkt und inneren Oberflächen auch im dynamischen Betrieb der Brennstoffzelle sicherzustellen.

Entsprechend Figur 1 wird über die Brennstoffzellensteuerung die Regelung des Drucks mittels einer geeigneten Regelstrategie automatisch vorgenommen, welche auf der gezielten Messung der Differenztemperatur zwischen Drucktaupunkt am Stackeintritt sowie der Ein- und/oder Austrittstemperatur des Kühlmediums beruht. Die Regelstrategie kann insbesondere auch zeitliche Gradienten der genannten Differenztemperatur berücksichtigen.

## Patentansprüche

1. Verfahren zum Betrieb einer PEM-Brennstoffzellenanlage, die mit Wasserstoff als Brenngas und mit Luft als Oxidans arbeitet, wobei für einen schnellen Lastwechsel eine ausreichende Luftversorgung erforderlich ist und wobei die zugeführte Luft befeuchtet werden muss, mit folgenden Verfahrensschritten:
- zur Bereitstellung von hinreichenden Luftmengen wird ein Verdichter verwendet,
- der Verdichter arbeitet bei möglichst niedrigen Drucken,
- die Befeuchtung der Luft entspricht dem Drucktaupunkt bei Kühlwasseraustrittstemperatur,
- sofern beim vorgegebenen niedrigen Druck keine ausreichende Befeuchtung der Luft mehr vorliegt, wird der Eingangsdruck so erhöht, dass die Luftbefeuchtung durch Verschiebung der Wasserdampfpartialdruckkurve erreicht wird,
- wozu eine geregelte Drosselung des Luftausgangsstromes erfolgt.

2. Verfahren nach Anspruch 1, **dadurch gekennzeichnet, dass** die Drosselung des Luftausgangsstromes über eine zugehörige Ansteuerelektronik automatisch erfolgt.

3. Verfahren nach Anspruch 2, **dadurch gekennzeichnet, dass** die Ansteuerelektronik von Mitteln zur zentralen Brennstoffzellen-Betriebsführung angesteuert wird.

4. Verfahren nach einem der vorhergehenden Ansprüche, **dadurch gekennzeichnet, dass** durch Verschiebung der Wasserdampfpartialdruckkurve die Luftbefeuchtung mit geringerem Energieaufwand als ohne die Drosselung des Luftausgangsstromes erforderliche Energie erfolgt.

5. Verfahren nach Anspruch 4, **dadurch gekennzeichnet, dass** durch die Verschiebung der Wasserdampfpartialdruckkurve für eine ausreichende Befeuchtung der Luft geringere Mengen an Wasser als ohne Verschiebung verwendet werden.

6. PEM-Brennstoffzellenanlage mit wenigstens einem Brennstoffzellenmodul aus PEM-Brennstoffzellen, denen als Prozessgase Wasserstoff einerseits und Luft andererseits zugeführt werden, mit Mitteln zur Luftversorgung und zur Befeuchtung der zugeführten Luft, die einen Verdichter zum Verdichten der Luft umfassen, und mit einer Steuereinrichtung zur Führung des Brennstoffzellen-Betriebsprozesses, **dadurch gekennzeichnet, dass** an der Ausgangsseite der Brennstoffzelle bzw. des Brennstoffzellenmoduls (10) ein Drosselorgan(15) mit einer zugehörigen Ansteuerelektronik (20) vorhanden ist, wobei der durch die Stellung des Drosselorgans (15) bedingte Druck die Verdichtungsleistung des Luftverdichters (35) bis zu einem Wert erhöht, bei dem ein Druck erreicht ist, der für die ausreichende Befeuchtung der Luft notwendig ist, und wobei die Ansteuerelektronik (20) zur Korrektur der Stellung des Drosselorgans (15) dient.

7. Brennstoffzellenanlage nach Anspruch 6, **dadurch gekennzeichnet, dass** eine bidirektionelle Verbindung zwischen Ansteuerelektronik (20) und Drosselorgan (15) vorhanden ist.

8. Brennstoffzellenanlage nach Anspruch 7, **dadurch gekennzeichnet, dass** die Ansteuerelektronik (20) eine bidirektionelle Verbindung zur Steuereinrichtung (30) zur Führung des Brennstoffzellen-Betriebsprozesses aufweist.

9. Brennstoffzellenanlage nach Anspruch 8, **dadurch gekennzeichnet, dass** die Steuereinrichtung (30) zur Führung des Brennstoffzellen-Betriebsprozesses Mittel (32) zur Istwerterfassung der Betriebsgrößen, insbesondere des Lufteingangsdruckes für das Brennstoffzellenmodul (10), aufweist.

10. Brennstoffzellenanlage nach Anspruch 6, **dadurch gekennzeichnet, dass** der Luftverdichter ein Schraubenverdichter (35) ist.

11. Brennstoffzellenanlage nach Anspruch 6, **dadurch gekennzeichnet, dass** das Drosselorgan eine steuerbare Drosselklappe (15) ist.

12. Brennstoffzellenanlage nach Anspruch 6, **dadurch gekennzeichnet, dass** ein Wärmetauscher (115) für das Kühlmedium vorhanden ist.

13. Brennstoffzellenanlage nach Anspruch 6, **dadurch gekennzeichnet, dass** ein Wasserabscheider (120) vorhanden ist, dem ein elektrisch steuerbares Ventil (140) zur Abgabe überschüssigen Wassers zugeordnet ist.

14. Brennstoffzellenanlage nach Anspruch 16, **dadurch gekennzeichnet, dass** der Wasserabscheider (120) eine Füllstandsanzeige (130) umfasst.

## Claims

1. Method of operating a PEM fuel cell system which operates with hydrogen as the fuel gas and with air as the oxidant, wherein a sufficient air supply is required for a rapid load change and the supplied air must be humidified, having the following method steps:
- a compressor is used to provide sufficient quantities of air,
- the compressor operates at the lowest possible pressures,
- the humidification of the air corresponds to the pressure dew point at the cooling-water outlet temperature,
- if the humidification of the air is no longer sufficient at the predetermined low pressure, the entry pressure is increased such that the humidification of the air is achieved by displacement of the water-vapour partial pressure curve,
- for which purpose, regulated throttling of the air exit stream is effected.

2. Method according to Claim 1, **characterised in that** the throttling of the air exit stream is effected automatically via associated actuating electronics.

3. Method according to Claim 2, **characterised in that** the actuating electronics are driven by means for the central fuel cell operating management.

4. Method according to one of the preceding claims, **characterised in that**, by displacement of the water-vapour partial pressure curve, the humidification of the air is effected with a lower energy consumption than the energy required without the throttling of the air exit stream.

5. Method according to Claim 4, **characterised in that**, by the displacement of the water-vapour partial pressure curve, smaller quantities of water are used than without displacement for sufficient humidification of the air.

6. PEM fuel cell system, having at least one fuel cell module comprising PEM fuel cells, to which are supplied on the one hand hydrogen and on the other hand air as process gases, having means for supplying the air and for humidifying the supplied air, which comprise a compressor for compressing the air, and having a control device for managing the fuel cell operating process, **characterised in that** a throttling member (15) having associated actuating electronics (20) is present at the outlet side of the fuel cell or of the fuel cell module (10), the pressure, governed by the position of the throttling member (15), increasing the compression power of the air compressor (35) to a value at which a pressure required for the sufficient humidification of the air is reached, and the actuating electronics (20) serving to correct the position of the throttling member (15).

7. Fuel cell system according to Claim 6, **characterised in that** a bidirectional connection between the actuating electronics (20) and the throttling member (15) is present.

8. Fuel cell system according to Claim 7, **characterised in that** the actuating electronics (20) have a bidirectional connection to the control device (30) for managing the fuel cell operating process.

9. Fuel cell system according to Claim 8, **characterised in that** the control device (30) for managing the fuel cell operating process has means (32) for recording actual values of the operating variables, in particular of the air entry pressure for the fuel cell module (10).

10. Fuel cell system according to Claim 6, **characterised in that** the air compressor is a screw-type compressor (35).

11. Fuel cell system according to Claim 6, **characterised in that** the throttling member is a controllable throttle valve (15).

12. Fuel cell system according to Claim 6, **characterised in that** a heat exchanger (115) for the cooling medium is present.

13. Fuel cell system according to Claim 6, **characterised in that** a water separator (120) is present, with which there is associated an electrically controllable valve (140) for discharging excess water.

14. Fuel cell system according to Claim 16, **characterised in that** the water separator (120) comprises a level indicator (130).

## Revendications

1. Procédé pour faire fonctionner une installation de piles à combustible PEM, qui fonctionne à l'hydrogène comme gaz combustible et à l'air comme oxydant, dans lequel on a besoin pour un changement rapide de charge d'une alimentation suffisante en air et dans lequel il faut humidifier l'air apporté, comprenant des stades de procédé suivantes :
- pour disposer de quantité d'air suffisante on utilise un compresseur,
- le compresseur travaille à des pressions aussi basses que possible,
- l'humidification de l'air correspond au point de rosée sous pression à la température de sortie de l'eau de refroidissement,
- dans la mesure où à la pression basse prescrite il n'y a plus une humidification suffisante de l'air, on augmente la pression d'entrée de façon à obtenir l'humidification de l'air par déplacement de la courbe de la pression partielle de la vapeur d'eau,
- en effectuant pour cela un étranglement réglé du courant de sortie d'air.

2. Procédé suivant la revendication 1, **caractérisé en ce que** l'on effectue automatiquement l'étranglement du courant de sortie d'air par une électronique de commande associée.

3. Procédé suivant la revendication 2, **caractérisé en ce que** l'on commande l'électronique de commande par des moyens pour piloter centralement le fonctionnement de piles à combustible.

4. Procédé suivant l'une des revendications précédentes, **caractérisé en ce que** l'on effectue par le décalage de la courbe de pression partielle de la vapeur d'eau l'humidification de l'air avec un coût en énergie plus petit que l'énergie nécessaire sans l'étranglement du courant de sortie de l'air.

5. Procédé suivant la revendication 4, **caractérisé en ce que** par le décalage de la courbe de la pression partielle de la vapeur d'eau on utilise, pour une humidification suffisante de l'air, des quantités plus petites d'eau que sans décalage.

6. Installation de piles à combustible PEM, ayant au moins un module de piles à combustible constitué de cellules de piles à combustible PEM, auquel on apporte comme gaz de processus de l'hydrogène, d'une part, et de l'air, d'autre part, comprenant des moyens d'alimentation en air et d'humidification de l'air apporté, qui comprennent un compresseur pour comprimer l'air, et comprenant un dispositif de commande pour piloter le processus de fonctionnement des piles à combustible, **caractérisée en ce qu'**il est prévu du côté sortie de la pile à combustible ou du module (10) de piles à combustible un organe (15) d'étranglement ayant une électronique (20) de commande associée, dans laquelle la pression provoquée par la position de l'organe (15) d'étranglement augmente la puissance de compression du compresseur (35) d'air jusqu'à une valeur pour laquelle est atteinte une pression qui est nécessaire pour l'humidification suffisante de l'air, l'électronique (20) de commande servant à corriger la position de l'organe (15) d'étranglement.

7. Installation de piles à combustible suivant la revendication 6, **caractérisée en ce qu'**il y a une liaison bidirectionnelle entre l'électronique (20) de commande et l'organe (15) d'étranglement.

8. Installation de piles à combustible suivant la revendication 7, **caractérisée en ce que** l'électronique (20) de commande a une liaison bidirectionnelle avec le dispositif (30) de commande pour piloter le processus de fonctionnement des piles à combustible.

9. Installation de piles à combustible suivant la revendication 8, **caractérisée en ce que** le dispositif (30) de commande pour piloter le processus de fonctionnement des piles à combustible a des moyens (32) de détection de la valeur réelle des grandeurs de fonctionnement, notamment de la pression d'entrée de l'air pour le module (10) de piles à combustible.

10. Installation de piles à combustible suivant la revendication 6, **caractérisée en ce que** le compresseur d'air est un compresseur (35) à vis.

11. Installation de piles à combustible suivant la revendication 6, **caractérisée en ce que** l'organe d'étranglement est un volet (15) d'étranglement qui peut être commandé.

12. Installation de piles à combustible suivant la revendication 6, **caractérisée en ce qu'**il y a un échangeur de chaleur (115) pour le fluide de refroidissement.

13. Installation de piles à combustible suivant la revendication 6, **caractérisée en ce qu'**il y a un séparateur (120) d'eau auquel est associée une électrovanne (140) pour évacuer de l'eau en excès.

14. Installation de piles à combustible suivant la revendication 6, **caractérisée en ce que** le séparateur (120) d'eau comprend un indicateur (130) de niveau.
